(19) Europäisches Patentamt
European Patent Office
Office européen des brevets

(11) **EP 3 380 728 B1**

(12) **FASCICULE DE BREVET EUROPEEN**

(45) Date de publication et mention de la délivrance du brevet:
**06.10.2021 Bulletin 2021/40**

(21) Numéro de dépôt: **16801504.8**

(22) Date de dépôt: **25.11.2016**

(51) Int Cl.:
*F03D 1/06* *(2006.01)*      *F03D 80/30* *(2016.01)*

(86) Numéro de dépôt international:
**PCT/EP2016/078904**

(87) Numéro de publication internationale:
**WO 2017/089591 (01.06.2017 Gazette 2017/22)**

(54) **PALE POUR ÉOLIENNE COMPRENANT UNE COUCHE DE MÉTALLISATION AYANT UN GRAMMAGE OPTIMISÉ**

WINDTURBINENBLATT EINSCHLIESSLICH EINER OPTIMIERTEN DICHTE DES METALLGITTERS

WIND TURBINE BLADE INCLUDING AN OPTIMIZED DENSITY OF THE METALLIC MESH

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 27.11.2015  FR 1561521
27.11.2015  FR 1561522
27.11.2015  FR 1561519

(43) Date de publication de la demande:
03.10.2018  Bulletin 2018/40

(73) Titulaire: **ARIANEGROUP SAS**
**75015 Paris (FR)**

(72) Inventeurs:
• **ASPAS PUERTOLAS, Jesus**
**75007 Paris (FR)**
• **COUDEYRE, Damien**
**33610 Cestas (FR)**
• **GINESTE, Pierre-Nicolas**
**95610 Eragny (FR)**

(74) Mandataire: **Brevalex**
**95, rue d'Amsterdam**
**75378 Paris Cedex 8 (FR)**

(56) Documents cités:
WO-A1-2005/050808      WO-A1-2013/007267
WO-A2-2008/048705      US-A1- 2008 145 229
US-A1- 2010 329 865      US-A1- 2011 318 981

**Description**

**DOMAINE TECHNIQUE**

La présente invention se rapporte au domaine des éoliennes et plus particulièrement à la protection contre la foudre des pales d'éoliennes.

Elle concerne en particulier une pale pour éolienne, et une éolienne comportant des pales de ce type.

**ÉTAT DE LA TECHNIQUE ANTÉRIEURE**

Les pales des éoliennes de dimensions dites moyennes, c'est à dire présentant une longueur comprise entre 10 mètres à 60 mètres environ, sont en général réalisées à partir d'une structure en matériau composite à base de fibres de verre.

La protection d'une pale d'une éolienne de ce type contre la foudre repose conventionnellement sur un système comportant des récepteurs de foudre métalliques affleurant la surface externe de la pale et répartis le long de celle-ci en étant reliés à un câble de descente électriquement conducteur s'étendant à l'intérieur de la pale le long du longeron interne de celle-ci et raccordé à des moyens de liaison à la Terre intégrés au moyeu du rotor de l'éolienne.

Ainsi, la foudre s'attache préférentiellement sur les récepteurs de foudre et est canalisée par le câble de descente jusqu'aux moyens de liaison à la Terre.

Toutefois, les progrès techniques en matière d'éolienne tendent à favoriser l'utilisation d'éoliennes de grandes dimensions, dont la longueur des pales peut dépasser 80 mètres.

Ces éoliennes constituent des édifices de grande hauteur, dépassant typiquement 150 mètres, pour lesquels il est connu que la foudre se manifeste essentiellement de manière ascendante, c'est à dire à partir de précurseurs circulant depuis l'édifice vers le nuage.

De plus, pour garantir la tenue mécanique des pales de telles éoliennes, la structure de ces pales intègre des matériaux composites à base de fibres de carbone, appréciées pour leurs propriétés mécaniques plus avantageuses que les fibres de verre.

Or, les fibres de carbone présentent notamment une conductivité électrique considérablement supérieure à celle des fibres de verre. La conductivité électrique d'un matériau composite à base de fibres de carbone demeure néanmoins considérablement inférieure à celle d'un matériau métallique, et en tout état de cause trop faible pour être en mesure de disperser le courant électrique induit par un impact de foudre sans que la structure ne soit endommagée au-delà d'un niveau acceptable.

Il en résulte un risque de compétition entre les récepteurs de foudre et les régions de la pale comprenant des fibres de carbone, ainsi qu'un risque d'arc électrique à l'intérieur de la pale entre les régions comprenant des fibres de carbone et le câble de descente. Un tel arc électrique à l'intérieur de la pale est susceptible de provoquer l'explosion de la pale. Le document WO2013/007267 divulgue une pale pour éolienne comprenant une couche de métallisation utilisée comme protection surfacique anti-foudre.

**EXPOSÉ DE L'INVENTION**

L'invention a notamment pour but d'apporter une solution simple, économique et efficace à ce problème.

Elle propose à cet effet une pale pour éolienne, comprenant une coque aérodynamique délimitant un volume intérieur de la pale.

Selon l'invention, la coque aérodynamique comprend au moins une structure stratifiée composite comportant au moins une couche de métallisation qui présente un grammage un grammage qui confère à la couche de métallisation une impédance surfacique comprise entre 130 $\mu\Omega$.carré (également noté « $\mu\Omega\square$ ») et 850 $\mu$Q.carré.

L'impédance surfacique peut être mesurée selon la méthode décrite dans le document US5086274 et dans le document équivalent EP0403344.

L'homme du métier sait déterminer le grammage à utiliser pour obtenir une impédance surfacique donnée, à partir de la relation existant entre l'impédance surfacique Zs, la conductivité électrique $\sigma$ du matériau formant la couche de métallisation, et l'épaisseur E de la couche de métallisation (ou dans le cas d'une couche ajourée, l'épaisseur de la couche pleine équivalente) :

$$Zs = \frac{1}{\sigma.E}$$

D'une manière générale, la structure stratifiée composite proposée permet de minimiser l'étendue surfacique de la zone éventuellement endommagée par la foudre.

Le demandeur a en effet constaté, à l'issue de campagnes d'essais de grande envergure, qu'un grammage conférant une impédance surfacique comprise dans la plage précitée offrait des performances remarquables en termes de tenue à la foudre, plus particulièrement en termes de captation de la foudre et de conduction du courant de foudre.

L'invention permet ainsi de réduire au mieux les coûts de maintenance relatifs aux impacts de foudre pouvant affecter une pale d'éolienne, et d'éviter le besoin d'intégrer à la pale des récepteurs de foudre additionnels distincts de la couche de métallisation. Ainsi, la pale est préférentiellement dépourvue de tout récepteur de foudre distinct de la couche de métallisation précitée.

De préférence, la structure stratifiée composite comporte au moins une couche réalisée en un matériau composite comprenant des fibres de carbone noyées dans une résine durcie.

Par ailleurs, la couche de métallisation est avantageusement formée d'une feuille de métal expansé.

En variante, la couche de métallisation peut être formée d'un tissu métallique.

De préférence, la couche de métallisation définit une surface extérieure de la structure stratifiée composite.

En variante, la couche de métallisation peut être recouverte d'une couche réalisée en un matériau composite comprenant des fibres de verre noyées dans une résine durcie.

D'une manière générale, la couche de métallisation est préférentiellement réalisée en cuivre et présente dans ce cas un grammage compris entre 400 g/m$^2$ et 1600 g/m$^2$. Ces valeurs de grammage correspondent en effet aux valeurs d'impédance surfacique précitées.

Dans ce cas, le grammage de la couche de métallisation est de préférence supérieur à 800 g/m$^2$.

Dans un premier mode de réalisation préféré de l'invention, la structure stratifiée composite comporte successivement, dans la direction allant de l'intérieur vers l'extérieur de la pale :

- une première couche réalisée en un matériau composite comprenant des fibres de verre noyées dans une résine durcie ;
- une deuxième couche réalisée en un matériau composite comprenant des fibres de carbone noyées dans une résine durcie ;
- une troisième couche réalisée en un matériau composite comprenant des fibres de verre noyées dans une résine durcie ;
- ladite couche de métallisation.

Dans un deuxième mode de réalisation préféré de l'invention, la structure stratifiée composite comporte successivement, dans la direction allant de l'intérieur vers l'extérieur de la pale :

- une première couche réalisée en un matériau composite comprenant des fibres de verre noyées dans une résine durcie ;
- une deuxième couche réalisée en un matériau composite comprenant des fibres de carbone noyées dans une résine durcie ;
- ladite couche de métallisation ; et
- une troisième couche réalisée en un matériau composite comprenant des fibres de carbone noyées dans une résine durcie.

Dans un troisième mode de réalisation préféré de l'invention, la structure stratifiée composite comporte successivement, dans la direction allant de l'intérieur vers l'extérieur de la pale :

- une première couche réalisée en un matériau composite comprenant des fibres de verre noyées dans une résine durcie ;
- une deuxième couche réalisée en un matériau composite comprenant des fibres de carbone noyées dans une résine durcie ;
- une couche de métallisation interne ;
- une troisième couche réalisée en un matériau composite comprenant des fibres de verre noyées dans une résine durcie ; et
- ladite couche de métallisation, formant une couche de métallisation externe.

D'une manière générale, la structure stratifiée composite est avantageusement revêtue de peinture recouvrant la couche de métallisation.

La couche de peinture est avantageusement pourvue d'au moins un orifice définissant une zone privilégiée de réception de foudre par la couche de métallisation.

La pale comprend de préférence un longeron interne comportant au moins une âme de cisaillement ainsi qu'au moins une semelle intégrée à la coque aérodynamique de la pale et raccordée à une extrémité latérale de l'âme de cisaillement, et ladite structure composite stratifiée forme de préférence ladite semelle ou une portion longitudinale de celle-ci.

L'invention concerne également une éolienne, comprenant une nacelle logeant un moyeu de rotor, et des pales portées par le moyeu de rotor, dans laquelle lesdites pales sont du type décrit ci-dessus, et ladite couche de métallisation de ladite structure stratifiée composite de chaque pale est raccordée électriquement à un dispositif de liaison à la Terre intégré au moyeu du rotor.

**BRÈVE DESCRIPTION DES DESSINS**

L'invention sera mieux comprise, et d'autres détails, avantages et caractéristiques de celle-ci apparaîtront à la lecture de la description suivante faite à titre d'exemple non limitatif et en référence aux dessins annexés dans lesquels :

- la figure 1 est une vue schématique d'une éolienne selon un mode de réalisation préféré de l'invention ;
- la figure 2 est une vue schématique en coupe transversale d'une pale de l'éolienne de la figure 1 ;
- la figure 3 est une vue schématique en perspective de la pale de la figure 2 ;
- la figure 4 est une vue schématique partielle en coupe d'une structure stratifiée composite selon un premier mode de réalisation préféré de l'invention, appartenant à une coque aérodynamique de la pale de la figure 2 ;
- la figure 4a est une vue semblable à la figure 4, illustrant une variante de la structure stratifiée composite ;
- la figure 5 est une vue semblable à la figure 4, illustrant une structure stratifiée composite selon un deuxième mode de réalisation préféré de l'invention ;
- la figure 5a est une vue semblable à la figure 5, illustrant une variante de la structure stratifiée composite ;

- la figure 6 est une vue semblable à la figure 4, illustrant une structure stratifiée composite selon un troisième mode de réalisation préféré de l'invention ;
- la figure 7 est une vue analogue à la figure 3 d'une variante de la pale de la figure 2.

Dans l'ensemble de ces figures, des références identiques peuvent désigner des éléments identiques ou analogues.

## EXPOSÉ DÉTAILLÉ DE MODES DE RÉALISATION PRÉFÉRÉS

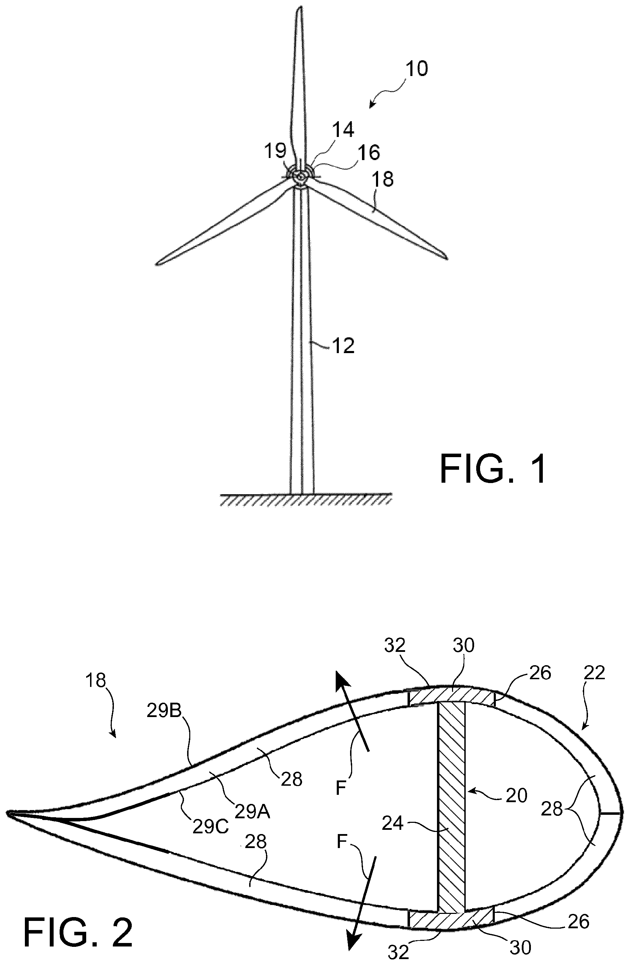

La figure 1 illustre une éolienne 10 comprenant de manière générale un mât 12, une nacelle 14 portée par le mât et logeant un moyeu de rotor 16 supportant des pales 18 et monté à rotation autour d'un axe de rotor 19. Chaque pale 18 comporte une base 17, par exemple de forme cylindrique, raccordée au moyeu de rotor 16, et se prolongeant en un profil aérodynamique effilé, d'une manière bien connue.

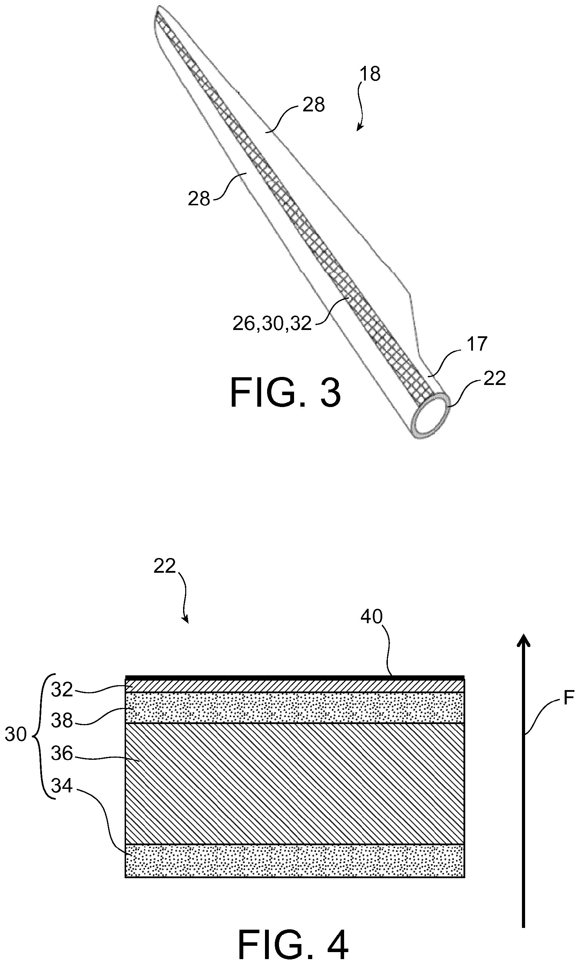

Les figures 2 et 3 illustrent grossièrement une pale 18 de l'éolienne 10. La pale 18 est globalement formée d'un longeron 20 et d'une coque aérodynamique 22 solidaire du longeron 20 et délimitant un volume intérieur de la pale (figure 2). Le longeron 20 peut bien entendu être réalisé d'une seule pièce ou être formé de plusieurs sections assemblées bout-à-bout. De plus, l'invention n'est pas limitée à une pale comportant un unique longeron. Ainsi, la pale 18 peut comporter plusieurs longerons parallèles, par exemple deux longerons.

Le longeron 20 comporte une âme de cisaillement 24 ainsi que deux semelles 26 intégrées à la coque aérodynamique 22 de la pale et raccordées respectivement aux extrémités latérales de l'âme de cisaillement 24.

Les deux semelles 26 prennent de manière générale la forme de structures stratifiées composites monolithiques.

La coque aérodynamique 22 comporte en outre des structures stratifiées composites sandwich 28 disposées de part et d'autre des semelles 26, et comportant typiquement des âmes 29A respectives réalisées en une mousse synthétique ou en balsa interposées entre une peau extérieure 29B et une peau intérieure 29C.

Selon une particularité de l'invention, la coque aérodynamique 22 comprend au moins une structure stratifiée composite 30 comportant au moins une couche de métallisation 32, raccordée électriquement à un dispositif de liaison à la Terre intégré au moyeu de rotor 16, et présentant un grammage qui confère à la couche de métallisation 32 une impédance surfacique comprise entre 130 $\mu\Omega$.carré et 850 $\mu\Omega$.carré.

La couche de métallisation 32 est préférentiellement réalisée en cuivre. Le cuivre présente notamment l'avantage d'une absence de couplage galvanique avec les fibres de carbone. De plus, le choix du cuivre est particulièrement pertinent en relation avec les valeurs de grammage précitées.

Dans ce cas, le grammage est compris entre 400 g/m$^2$ et 1600 g/m$^2$, et est de préférence supérieur à 800 g/m$^2$.

Le dispositif de liaison à la Terre peut être d'un type analogue aux dispositifs utilisés conventionnellement pour raccorder à la Terre les câbles de descente qui équipent l'intérieur des pales de types connus.

La structure stratifiée composite 30 comporte de préférence au moins une couche réalisée en un matériau composite comprenant des fibres de carbone noyées dans une résine durcie, comme cela apparaîtra plus clairement dans ce qui suit.

La couche comprenant les fibres de carbone permet de conférer une résistance mécanique élevée à la structure stratifiée composite 30.

La présence de fibres de carbone au sein de la structure stratifiée composite 30 rend celle-ci plus vulnérable aux impacts de foudre et rend d'autant plus avantageuse la présence de la couche de métallisation 32.

Il est à noter que le grammage de la couche de métallisation 32 confère à cette dernière non seulement des propriétés de conduction du courant de foudre, comme le ferait un câble de descente conventionnel, mais également des propriétés satisfaisantes en termes de captation de la foudre, en permettant à la couche de métallisation 32 de jouer un rôle de récepteur de foudre. L'invention permet ainsi d'éviter le recours à des récepteurs additionnels distincts de la (ou de chaque) couche de métallisation 32.

D'une manière générale, la structure stratifiée composite 30 comprenant la couche de métallisation 32 offre ainsi une protection optimale aux impacts de foudre.

Plus précisément, en cas d'impact de foudre, les inventeurs ont pu démontrer que le grammage de la couche de métallisation 32 proposée par l'invention permet de minimiser l'étendue surfacique de la zone éventuellement endommagée par la foudre. En particulier, un tel grammage permet à la couche de métallisation 32 d'assurer la protection de la structure sous-jacente vis-à-vis des impacts de foudre correspondant au niveau 1 de la norme IEC 61400-24 (200 kA, 10 MJ).

Un grammage conférant une impédance surfacique considérablement inférieure à 850 $\mu\Omega$.carré, par exemple un grammage égal à 800 g/m$^2$ environ dans le cas d'une couche de métallisation en cuivre, permet en outre de garantir l'intégrité de la structure sous-jacente après plusieurs impacts consécutifs en une même zone de la structure stratifiée composite 30.

De plus, un grammage conférant une impédance surfacique de 130 $\mu\Omega$.carré environ permet de garantir l'intégrité de la structure sous-jacente après au moins six impacts consécutifs en une même zone de la structure stratifiée composite 30.

Dans tous les cas, le grammage de la couche de métallisation 32 proposé par l'invention permet en outre à cette couche de métallisation de remplir efficacement la fonction de conduction du courant de foudre vers la Terre.

L'invention permet ainsi d'une manière générale de réduire au mieux les coûts de maintenance relatifs aux impacts de foudre pouvant affecter une pale d'éolienne.

Dans les modes de réalisation illustrés, les structures stratifiées composites 30 sont au nombre de deux et forment respectivement les deux semelles 26 du longeron 20.

La ou chaque structure stratifiée composite 30 forme en outre de préférence une extension de la semelle 26 correspondante jusqu'au bout libre de la pale (également dénommé « tip » d'après la terminologie anglo-saxonne).

En variante, la coque aérodynamique 22 peut comporter une unique structure stratifiée composite 30 comportant au moins une couche de métallisation 32 et formant l'une des deux semelles 26 du longeron 20 (et s'étendant éventuellement jusqu'au bout de la pale), tandis que l'autre des semelles 26 peut être formée d'une structure composite dépourvue de couche de métallisation.

Une telle unique structure stratifiée composite 30 s'est en effet révélée suffisante pour protéger l'ensemble d'une pale, en tant que récepteur de foudre et conducteur « de descente » (c'est-à-dire pour conduire le courant de foudre vers la Terre).

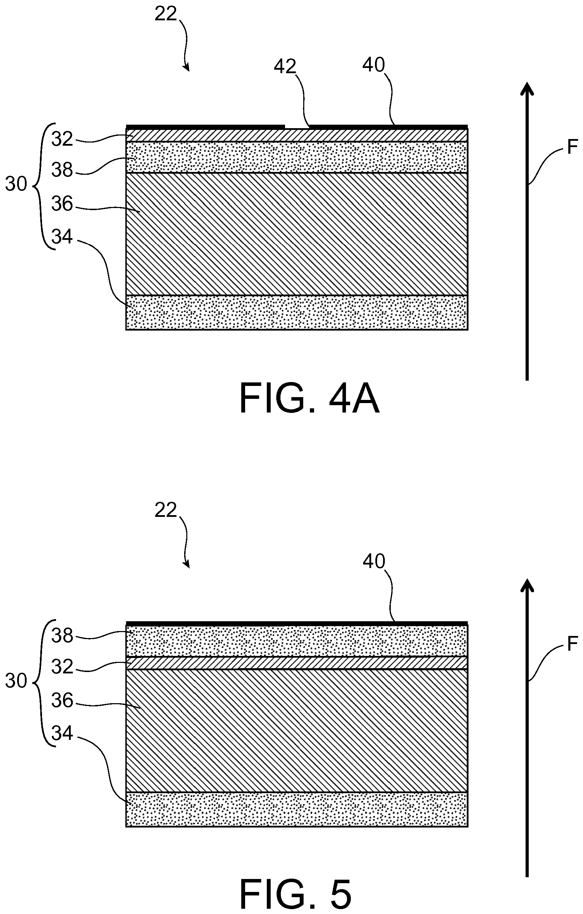

Dans le premier mode de réalisation de l'invention préféré illustré sur les figures, comme le montre la figure 4, chaque structure stratifiée composite 30 comporte successivement, dans la direction F allant de l'intérieur vers l'extérieur de la pale :

- une première couche 34 réalisée en un matériau composite comprenant des fibres de verre noyées dans une résine durcie, d'épaisseur de préférence comprise entre 1 mm et 3 mm ;
- une deuxième couche 36 réalisée en un matériau composite comprenant des fibres de carbone noyées dans une résine durcie, d'épaisseur de préférence comprise entre 5 mm et 70 mm ;
- une troisième couche 38 réalisée en un matériau composite comprenant des fibres de verre noyées dans une résine durcie, d'épaisseur de préférence comprise entre 1 mm et 3 mm ; et
- ladite couche de métallisation 32.

La couche de métallisation 32 définit ainsi une surface extérieure de la structure stratifiée composite 30.

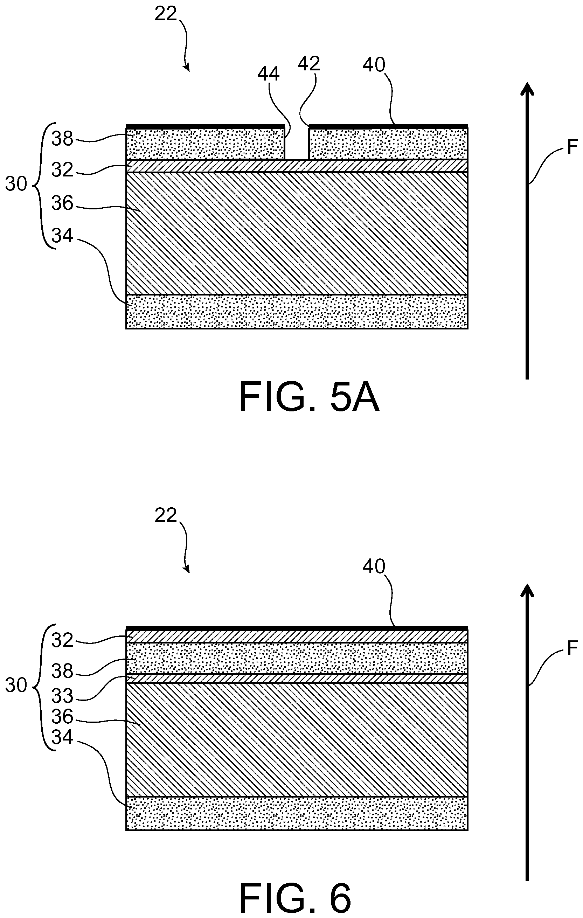

Dans un deuxième mode de réalisation préféré de l'invention illustré sur la figure 5, la structure stratifiée composite 30 comprend successivement, dans la direction F allant de l'intérieur vers l'extérieur de la pale 18 :

- la première couche 34 réalisée en un matériau composite comprenant des fibres de verre noyées dans une résine durcie, d'épaisseur de préférence comprise entre 1 mm et 3 mm ;
- la deuxième couche 36 réalisée en un matériau composite comprenant des fibres de carbone noyées dans une résine durcie, d'épaisseur de préférence comprise entre 5 mm et 70 mm ;
- ladite couche de métallisation 32 ; et
- la troisième couche 38 réalisée en un matériau composite comprenant des fibres de verre noyées dans une résine durcie, d'épaisseur de préférence comprise entre 1 mm et 3 mm.

Autrement dit, la structure stratifiée composite 30 de la figure 5 se différencie de celle de la figure 4 du fait que la couche de métallisation 32 et la troisième couche 38 sont interverties.

Ainsi, c'est la quatrième couche 38 de composite en fibres de verre qui définit une surface extérieure de la structure stratifiée composite 30.

Les inventeurs ont en effet démontré que la protection conférée par la couche de métallisation 32 reste efficace même lorsque cette couche de métallisation est agencée au-dessous de la troisième couche 38 de composite en fibres de verre.

Dans un troisième mode de réalisation préféré de l'invention illustré sur la figure 6, la structure stratifiée composite 30 comprend successivement, dans la direction F allant de l'intérieur vers l'extérieur de la pale 18 :

- la première couche 34 réalisée en un matériau composite comprenant des fibres de verre noyées dans une résine durcie ;
- la deuxième couche 36 réalisée en un matériau composite comprenant des fibres de carbone noyées dans une résine durcie, d'épaisseur de préférence comprise entre 5 mm et 70 mm ;
- une couche de métallisation interne 33 ;
- la troisième couche 38 réalisée en un matériau composite comprenant des fibres de verre noyées dans une résine durcie, d'épaisseur de préférence comprise entre 1 mm et 3 mm ; et
- la couche de métallisation 32, formant une couche de métallisation externe.

Dans ce cas, chacune des couches de métallisation externe 32 et interne 33 est raccordée électriquement au dispositif de liaison à la Terre intégré au moyeu de rotor 16.

Il est à noter que dans l'exemple illustré, la couche de métallisation 32 (externe) définit une surface extérieure de la structure stratifiée composite 30.

Le grammage de la couche de métallisation interne 33 peut être inférieur à celui de la couche de métallisation 32, et est préférentiellement égal à 200 g/m$^2$ environ dans le cas d'une couche de métallisation interne 33 en cuivre.

Bien entendu, pour chacun des modes de réalisation décrits ci-dessus, il faut comprendre que les couches 32, 33, 34, 36, et 38 sont empilées les unes au-dessus des autres de sorte que deux couches consécutives soient directement en contact l'une avec l'autre.

Dans chacun des exemples illustrés sur les figures 4-6, la structure stratifiée composite 30 est revêtue d'une couche de peinture 40 recouvrant la couche de métallisation 32.

La couche de peinture 40 permet, de manière connue en soi, de protéger la pale contre l'érosion.

De préférence, la structure stratifiée composite 30 comporte au moins un orifice définissant une zone privilégiée de réception de foudre par la couche de métallisation 32, c'est-à-dire un orifice par lequel la couche de métallisation 32 est électromagnétiquement exposée au milieu extérieur. Il faut comprendre par-là que la couche de métallisation 32 n'est pas recouverte par un matériau diélectrique au niveau d'un tel orifice, mais qu'une peinture électriquement conductrice ou un traitement de surface métallique peut être appliqué sur la couche de métallisation 32 au niveau de l'orifice pour protéger la couche de métallisation 32 contre la corrosion.

Le rôle de récepteur de la couche de métallisation 32 est ainsi renforcé au niveau de chaque orifice précité.

Plus précisément, comme le montre la figure 4A qui illustre une variante de la structure stratifiée composite 30 de la figure 4, la couche de peinture 40 comporte de préférence au moins un orifice 42 agencé sur la couche de métallisation 32 de manière à exposer électromagnétiquement cette dernière au milieu extérieur.

Le même principe est applicable à la structure stratifiée composite 30 de la figure 6.

Le même principe est aussi applicable à la structure stratifiée composite 30 de la figure 5, auquel cas chaque orifice 42 de la couche de métallisation 32 est prolongé par un orifice correspondant 44 formé dans la troisième couche 38 de matériau composite (figure 5A).

L'éventuelle peinture électriquement conductrice ou l'éventuel traitement de surface métallique ne sont pas représentés sur les figures 4A et 5A.

De plus, dans chacun des exemples illustrés, la couche de métallisation 32 est formée d'une feuille de métal expansé. Une telle couche de métallisation présente l'avantage d'être réalisée d'un seul tenant, d'où il résulte une continuité électrique optimale.

En variante, la couche de métallisation 32 peut être formée d'un tissu métallique.

Il en est de même en ce qui concerne la couche de métallisation interne 33 de la figure 6.

Bien entendu, la couche de métallisation 32 est reliée électriquement à la deuxième couche 36 de composite en fibres de carbone de manière à assurer l'équipotentialité de ces deux couches. Différentes techniques connues de l'homme du métier existent pour permettre une telle liaison électrique. Il en est de même en ce qui concerne la couche de métallisation interne 33 de la figure 6.

Dans les deux cas, la structure composite 30 peut ainsi être réalisée par drapage de fibres sèches destinées à former les couches 34, 36 et 38 en matériau composite, puis par infusion de la résine au travers de la couche de métallisation 32 et des fibres sèches préalablement drapées, et le cas échéant, au travers de la couche de métallisation interne 33. La fabrication de la structure composite 30 peut ainsi être simplifiée. De plus, la résine permet ainsi l'adhésion de la ou chaque couche de métallisation 32, 33 au reste de la structure composite 30.

Il est à noter que la peau extérieure 29B des structures stratifiées composites sandwich 28 peut également être, en tout ou partie, formée d'une structure stratifiée composite semblable aux structures stratifiées composites 30 décrites ci-dessus, sans sortir du cadre de la présente invention.

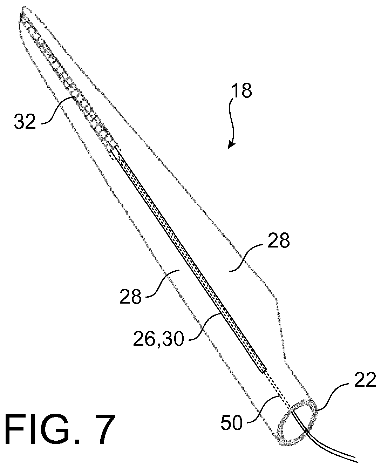

La figure 7 illustre une variante de réalisation de la pale 18 des figures 3 et 4, dans laquelle la couche de métallisation 32 ne s'étend pas sur toute la longueur de la structure stratifiée 30 mais seulement sur une portion longitudinale de cette dernière, de préférence à partir de l'extrémité de la structure stratifiée 30 située du côté du bout de la pale 18, par exemple sur une étendue longitudinale environ égale au tiers de l'étendue longitudinale de la structure stratifiée 30.

Dans ce cas, la pale 18 intègre un câble de descente 50 relié d'une part au dispositif de liaison à la Terre intégré au moyeu de rotor 16, et d'autre part à la couche de métallisation 32, de préférence au niveau d'une extrémité de cette dernière située du côté de la base 17 de la pale. Le câble de descente 50 ne se prolonge ainsi pas sous la couche de métallisation 32.

La liaison entre le câble de descente 50 et la couche de métallisation 32 est par exemple réalisée au moyen de plots métalliques (non visibles sur la figure 7) traversant au moins partiellement la structure stratifiée 30 à proximité de l'extrémité de cette dernière.

Les risques d'arc électrique mentionnés ci-dessus en ce qui concerne les pales de type connu concernent principalement la partie de la pale proche du bout de cette pale. Ainsi, l'agencement de la couche de métallisation 32 dans une portion de la pale proche du bout de cette dernière, en association avec le câble de descente 50 agencé au-delà de la couche de métallisation, peut se révéler suffisant pour prévenir les risques d'arcs électriques.

## Revendications

1. Pale (18) pour éolienne (10), comprenant une coque aérodynamique (22) délimitant un volume intérieur de la pale, la coque aérodynamique comprenant au moins une structure stratifiée composite (30) comportant au moins une couche de métallisation (32), **caractérisée en ce que** la couche de métallisation (32) présente un grammage qui confère à la couche de métallisation (32) une impédance surfacique comprise entre 130 µΩ.carré et 850 µΩ.carré.

2. Pale selon la revendication 1, dans laquelle la structure stratifiée composite (30) comporte au moins une deuxième couche (36) réalisée en un matériau composite comprenant des fibres de carbone noyées dans une résine durcie.

3. Pale selon la revendication 2, dans laquelle la structure stratifiée composite (30) comporte successivement, dans la direction (F) allant de l'intérieur vers l'extérieur de la pale (18) :

- une première couche (34) réalisée en un matériau composite comprenant des fibres de verre noyées dans une résine durcie ;
- ladite deuxième couche (36) réalisée en un matériau composite comprenant des fibres de carbone noyées dans une résine durcie ;
- une troisième couche (38) réalisée en un matériau composite comprenant des fibres de verre noyées dans une résine durcie ;
- ladite couche de métallisation (32).

4. Pale selon la revendication 2, dans laquelle la structure stratifiée composite (30) comporte successivement, dans la direction (F) allant de l'intérieur vers l'extérieur de la pale (18) :

- une première couche (34) réalisée en un matériau composite comprenant des fibres de verre noyées dans une résine durcie ;
- ladite deuxième couche (36) réalisée en un matériau composite comprenant des fibres de carbone noyées dans une résine durcie ;
- ladite couche de métallisation (32) ; et
- une troisième couche (38) réalisée en un matériau composite comprenant des fibres de verre noyées dans une résine durcie.

5. Pale selon la revendication 2, dans laquelle la structure stratifiée composite (30) comporte successivement, dans la direction (F) allant de l'intérieur vers l'extérieur de la pale (18) :

- une première couche (34) réalisée en un matériau composite comprenant des fibres de verre noyées dans une résine durcie ;
- ladite deuxième couche (36) réalisée en un matériau composite comprenant des fibres de carbone noyées dans une résine durcie ;
- une couche de métallisation interne (33) ;
- une troisième couche (38) réalisée en un matériau composite comprenant des fibres de verre noyées dans une résine durcie ; et
- ladite couche de métallisation (32), formant une couche de métallisation externe.

6. Pale selon l'une quelconque des revendications précédentes, dans laquelle la structure stratifiée composite (30) est revêtue d'une couche de peinture (40) recouvrant la couche de métallisation (32).

7. Pale selon la revendication 6, dans laquelle la couche de peinture (40) est pourvue d'au moins un orifice (42) définissant une zone privilégiée de réception de foudre par la couche de métallisation (32).

8. Pale selon l'une quelconque des revendications précédentes, **caractérisée en outre en ce qu'**elle est dépourvue de tout récepteur de foudre distinct de la couche de métallisation (32).

9. Pale selon l'une quelconque des revendications précédentes, dans laquelle la couche de métallisation (32) est réalisée en cuivre et présente un grammage compris entre 400 g/m$^2$ et 1600 g/m$^2$.

10. Pale selon l'une quelconque des revendications précédentes, comprenant un longeron interne (20) comportant au moins une âme de cisaillement (24) ainsi qu'au moins une semelle (26) intégrée à la coque aérodynamique (22) de la pale (18) et raccordée à une extrémité latérale de l'âme de cisaillement (24), ladite structure composite stratifiée (30) formant au moins partiellement ladite semelle (26).

11. Eolienne (10), comprenant une nacelle (14) logeant un moyeu de rotor (16), et des pales (18) portées par le moyeu de rotor (16), **caractérisée en ce que** lesdites pales (18) sont conformes à l'une quelconque des revendications précédentes, et **en ce que** ladite couche de métallisation (32) de ladite au moins une structure stratifiée composite (30) de chaque pale (18) est raccordée électriquement à un dispositif de liaison à la Terre intégré au moyeu du rotor (16).

**Patentansprüche**

1. Rotorblatt (18) für eine Windkraftanlage (10), enthaltend eine aerodynamische Schale (22), die einen Innenraum des Rotorblatts begrenzt, wobei die aerodynamische Schale zumindest eine Verbundlaminatstruktur (30) aufweist, die zumindest eine Metallisierungsschicht (32) enthält,
**dadurch gekennzeichnet, dass** die Metallisierungsschicht (32) ein Flächengewicht aufweist, das der Metallisierungsschicht (32) eine Oberflächenimpedanz zwischen 130 µΩ.Quadrat und 850 µΩ.Quadrat verleiht.

2. Rotorblatt nach Anspruch 1, wobei die Verbundlaminatstruktur (30) zumindest eine zweite Schicht (36) aus einem Verbundwerkstoff enthält, der in ein gehärtetes Harz eingebettete Kohlenstofffasern aufweist.

**3.** Rotorblatt nach Anspruch 2, wobei die Verbundlaminatstruktur (30) in Richtung (F) von der Innenseite zur Außenseite des Rotorblatts (18) aufeinanderfolgend enthält:

   - eine erste Schicht (34) aus einem Verbundwerkstoff mit Glasfasern, die in ein gehärtetes Harz eingebettet sind;
   - die zweite Schicht (36) aus einem Verbundwerkstoff mit Kohlenstofffasern, die in ein gehärtetes Harz eingebettet sind;
   - eine dritte Schicht (38) aus einem Verbundwerkstoff mit Glasfasern, die in ein gehärtetes Harz eingebettet sind;
   - die Metallisierungsschicht (32).

**4.** Rotorblatt nach Anspruch 2, wobei die Verbundlaminatstruktur (30) in Richtung (F) von der Innenseite zur Außenseite des Rotorblatts (18) aufeinanderfolgend enthält:

   - eine erste Schicht (34) aus einem Verbundwerkstoff mit Glasfasern, die in ein gehärtetes Harz eingebettet sind;
   - die zweite Schicht (36) aus einem Verbundwerkstoff mit Kohlenstofffasern, die in ein gehärtetes Harz eingebettet sind;
   - die Metallisierungsschicht (32); und
   - eine dritte Schicht (38) aus einem Verbundwerkstoff mit Glasfasern, die in ein gehärtetes Harz eingebettet sind.

**5.** Rotorblatt nach Anspruch 2, wobei die Verbundlaminatstruktur (30) in Richtung (F) von der Innenseite zur Außenseite des Rotorblatts (18) aufeinanderfolgend enthält:

   - eine erste Schicht (34) aus einem Verbundwerkstoff mit Glasfasern, die in ein gehärtetes Harz eingebettet sind;
   - die zweite Schicht (36) aus einem Verbundwerkstoff mit Kohlenstofffasern, die in ein gehärtetes Harz eingebettet sind;
   - eine innere Metallisierungsschicht (33);
   - eine dritte Schicht (38) aus einem Verbundwerkstoff mit Glasfasern, die in ein gehärtetes Harz eingebettet sind; und
   - die Metallisierungsschicht (32), die eine äußere Metallisierungsschicht bildet.

**6.** Rotorblatt nach einem der vorhergehenden Ansprüche, wobei die Verbundlaminatstruktur (30) mit einer Farbschicht (40) beschichtet ist, die die Metallisierungsschicht (32) bedeckt.

**7.** Rotorblatt nach Anspruch 6, wobei die Farbschicht (40) mit zumindest einer Öffnung (42) versehen ist, die einen Vorzugsbereich zum Aufnehmen von Blitzen durch die Metallisierungsschicht (32) definiert.

**8.** Rotorblatt nach einem der vorhergehenden Ansprüche, **dadurch gekennzeichnet, dass** es keinen anderen Blitzrezeptor als die Metallisierungsschicht (32) aufweist.

**9.** Rotorblatt nach einem der vorhergehenden Ansprüche, wobei die Metallisierungsschicht (32) aus Kupfer besteht und ein Flächengewicht zwischen 400 g/m$^2$ und 1600 g/m$^2$ aufweist.

**10.** Rotorblatt nach einem der vorhergehenden Ansprüche, enthaltend einen inneren Holm (20), der zumindest einen Schersteg (24) sowie zumindest eine Sohle (26) aufweist, die in die aerodynamische Schale (22) des Rotorblattes (18) integriert und mit einem seitlichen Ende des Scherstegs (24) verbunden ist, wobei die Verbundlaminatstruktur (30) zumindest teilweise die Sohle (26) bildet.

**11.** Windkraftanlage (10) mit einer Gondel (14), in der eine Rotornabe (16) aufgenommen ist, und Rotorblättern (18), die von der Rotornabe (16) getragen werden, **dadurch gekennzeichnet, dass** die Rotorblätter (18) einem der vorhergehenden Ansprüche entsprechen und dass die Metallisierungsschicht (32) der zumindest einen Verbundlaminatstruktur (30) jedes Rotorblattes (18) elektrisch mit einer in der Rotornabe (16) integrierten Erdungsvorrichtung verbunden ist.

**Claims**

**1.** A blade (18) for a wind turbine (10), comprising an aerodynamic shell (22) delimiting an internal volume of the blade, the aerodynamic shell comprising at least one composite laminated structure (30) comprising at least one metallisation layer (32), **characterised in that** the metallisation layer (32) has a basis weight which gives the metallisation layer (32) a surface impedance of between 130µΩ.square and 850µΩ.square.

**2.** The blade according to claim 1, wherein the composite laminated structure (30) comprises at least one second layer (36) made of a composite material comprising carbon fibres embedded in a cured resin.

**3.** The blade according to claim 2, wherein the composite laminated structure (30) successively comprises, in the direction (F) from the inside to the outside of the blade (18):

   - a first layer (34) made of a composite material comprising glass fibres embedded in a cured resin;
- said second layer (36) made of a composite material comprising carbon fibres embedded in a cured resin;
- a third layer (38) made of a composite material comprising glass fibres embedded in a cured resin;
- said metallisation layer (32).

4. The blade according to claim 2, wherein the composite laminated structure (30) successively comprises, in the direction (F) from the inside to the outside of the blade (18):

- a first layer (34) made of a composite material comprising glass fibres embedded in a cured resin;
- said second layer (36) made of a composite material comprising carbon fibres embedded in a cured resin;
- said metallisation layer (32); and
- a third layer (38) made of a composite material comprising glass fibres embedded in a cured resin.

5. The blade according to claim 2, wherein the composite laminated structure (30) successively comprises, in the direction (F) from the inside to the outside of the blade (18):

- a first layer (34) made of a composite material comprising glass fibres embedded in a cured resin;
- said second layer (36) made of a composite material comprising carbon fibres embedded in a cured resin;
- an inner metallisation layer (33);
- a third layer (38) made of a composite material comprising glass fibres embedded in a cured resin; and
- said metallisation layer (32), forming an outer metallisation layer.

6. The blade according to any of the preceding claims, wherein the composite laminated structure (30) is coated with a paint layer (40) covering the metallisation layer (32).

7. The blade according to claim 6, wherein the paint layer (40) is provided with at least one aperture (42) defining a privileged zone for receiving lightning through the metallisation layer (32).

8. The blade according to any of the preceding claims, further **characterised in that** it is free of any lightning receiver distinct from the metallisation layer (32).

9. The blade according to any of the preceding claims, wherein the metallisation layer (32) is made of copper and has a basis weight of between 400g/m$^2$ and 1600g/m$^2$.

10. The blade according to any of the preceding claims, comprising an inner spar (20) comprising at least one shear core (24) as well as at least one flange (26) integrated into the aerodynamic shell (22) of the blade (18) and connected to a side end of the shear core (24), said composite laminated structure (30) at least partially forming said flange (26).

11. A wind turbine (10), comprising a nacelle (14) housing a rotor hub (16), and blades (18) carried by the rotor hub (16), **characterised in that** said blades (18) are according to any of the preceding claims, and **in that** said metallisation layer (32) of said at least one composite laminated structure (30) of each blade (18) is electrically connected to an earthing device integrated into the rotor hub (16).

FIG. 1

FIG. 2

FIG. 3

FIG. 4

FIG. 4A

FIG. 5

FIG. 5A

FIG. 6

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013007267 A
- US 5086274 A
- EP 0403344 A